# EUROPÄISCHE PATENTSCHRIFT

(11) **EP 2 103 578 B1**
(45) Veröffentlichungstag und Bekanntmachung des Hinweises auf die Patenterteilung: **01.05.2019**
(21) Anmeldenummer: 09003665.8
(22) Anmeldetag: 13.03.2009
(51) Int. Cl.: E04F 17/02, C04B 111/28, C04B 111/56, C04B 28/26

(54) **KAMINBAUEINHEIT HERGESTELLT AUS EINEM REAKTIONSGEHÄRTETEN FASERVERBUNDSTOFF**
CONSTRUCTION UNIT FOR SET-UP OF AN EXHAUST MADE FROM A REACTION HARDENED FIBRE COMPOSITE MATERIAL
PIÈCE DE CONSTRUCTION POUR UN FOUR FAITE D'UN COMPOSITE EN FIBRES DURCI PAR UNE RÉACTION CHIMIQUE

(30) Priorität: 14.03.2008 DE 102008016412
(43) Veröffentlichungstag der Anmeldung: 23.09.2009
(73) Patentinhaber: ERLUS AKTIENGESELLSCHAFT, 84088 Neufahrn (DE)
(72) Erfinder: Hugo, Hubacek, 1080 Wien (AT); Rüdiger, Grau, 86637 Wertingen (DE); Josef, Voith, 84056 Rottenburg (DE); Markus, Schulte, 84088 Neufahrn (DE)
(74) Vertreter: Louis Pöhlau Lohrentz

(56) Entgegenhaltungen:
- EP-A1- 0 593 784
- EP-A2- 1 106 315
- WO-A1-2004/110951
- DE-A1- 3 409 386
- DE-A1- 3 942 338
- DE-A1- 4 213 388
- DE-C1- 4 018 056
- DE-U1- 8 307 677
- DE-U1- 29 624 470
- JP-A- 2004 035 377
- US-A- 4 600 437
- US-A1- 2005 066 859

## Beschreibung

Die Erfindung betrifft eine Kaminbaueinheit, hergestellt aus einem feuer- und temperaturbeständigen Faserverbundstoff, welcher durch eine chemische Reaktion aushärtet. Die Erfindung betrifft ferner eine aus einem feuer- und temperaturbeständigen Faserverbundstoff hergestellte Kaminbaueinheit, die ein feuerbeständiges Rohr ist, sowie Verfahren zur Herstellung einer Kaminbaueinheit.

Derartige feuer- und temperaturbeständige Rohre sind insbesondere als Rauchgasrohre in Kaminen und/oder als Rohre für entzündliche Flüssigkeiten und/oder heiße Flüssigkeiten geeignet.

Als Rauchgasrohre in Kaminen werden bekannterweise keramische Rohre, insbesondere Schamotterohre, eingesetzt. Solche Rauchgasrohre können durch Extrusion oder durch Pressen, insbesondere Trockenpressung, hergestellt werden. Unter Schamotte versteht man vorzugsweise vorgebranntes keramisches Material. Solche extrudierte Schamotterohre haben in der Praxis üblicherweise eine Wandstärke größer 10 mm.

Alternativ zu den Schamotterohren sind Rauchgasrohre aus sogenannter Edelkeramik bekannt. Diese werden durch isostatisches Pressen hergestellt. Das Pulvermaterial ist sehr trocken und besitzt eine sehr enge Siebkurve. Die durch isostatisches Pressen aus diesem Material hergestellten Rauchgasrohre haben üblicherweise eine um mindestens 50 % geringere Wandstärke als die Schamotterohre. Ihre Wandstärke liegt in der Praxis kleiner als 10 mm.

Bei der herkömmlichen Herstellung von Schamotterohren für den Kaminbau liegen die Brenntemperaturen über 1000°C. Dies führt zu hohen CO₂-Emissionen und hohen Energiekosten. Ferner werden aufwendige Press- und Formtechnologien benötigt. Darüber hinaus weisen die fertigen Schamotterohre ein hohes spezifisches Gewicht auf.

In der Praxis werden außerdem Betonrohre eingesetzt. Beton besitzt Zement als Bindemittel. Bei den im Kaminbau vorkommenden hohen Temperaturen bis 1000°C ergeben sich bei Verwendung von Zement Probleme, da bei den hohen Temperaturen die im Zementstein enthaltenen Calciumsilikathydrate unter Gefügezerstörung entwässern. Bei Betonrohren mit herkömmlichen Zementen treten daher im Bereich von beispielsweise 400°C und mehr vielfach Spannungsrisse auf. Des weiteren werden die Calciumsilikathydrate durch die bei feuchter Betriebsweise aus den Rauchgasen kondensierenden Säuren angegriffen, so dass die Korrosionsbeständigkeit von Betonrohren für moderne Abgasanlagen ungenügend ist. Als Faserzementrohre wurden in der Vergangenheit häufig Asbestzementrohre eingesetzt. Diese sind jedoch wegen ihrer Toxizität in der Praxis heute nicht mehr einsetzbar.

Generell besteht bei der Verwendung von Betoninnenrohren ein Problem mit dem kapillaren und diffusen Wassertransport durch die Rohrwandung, da das Gefüge der Betonrohre nicht dicht genug ist und diese somit nicht für feuchte Betriebsweise der Schornsteine geeignet sind.

Aus der DE 83 07 677.8 U1 ist ein Schornsteinmantel aus Beton mit einer Armierung aus Glas- oder Kohlenstofffasern bekannt. Da das Material dieses Schomsteinmantels nicht ausreichend korrosionsbeständig ist und einen unerwünschten diffusen Wassertransport zuläßt, kann es nicht als Material für ein Innenrohr verwendet werden.

Die DE 25 03 271 offenbart eine schäumbare keramische Masse, die 2 bis 35 Gewichtsteile hydraulischen Zement sowie 20 bis 95 Gewichtsteile Ton und 0,2 bis 30 Gewichtsteile eines inerten, korpuskularen, lamellaren Schaumstabilisators enthält. Diese geschäumten Tonmassen werden beispielsweise als Isoliermaterial verwendet. Diese geschäumte Tonmasse weist jedoch einen Anteil an miteinander verbundenen Poren auf, weshalb dieses geschäumte Tonmaterial durchlässig ist. Aufgrund dieser durch die Porosität bedingten Durchlässigkeit ist dieses geschäumte Tonmaterial nicht zur Verwendung bei der Herstellung von feuerbeständigen Rohren, beispielsweise als Rauchgasrohre oder als Rohre für brennbare Flüssigkeiten und Gase geeignet.

Die DE 36 32 006 A1 betrifft eine feuerbeständige intumeszierende, d.h. unter Beaufschlagung von Hitze expandierende Dichtungsmasse. Aufgrund der intumeszierenden Eigenschaften eignet sich diese Material als Dichtungsmasse jedoch nicht zur Herstellung eines temperaturbeständigen Materials, das beispielsweise in Form von feuerbeständigen Rohren Verwendung finden soll.

Die DE 34 09 386 A1 betrifft ein Rauchgas führendes Rohr für Schornsteine. Die JP 2004-35377 betrifft ein beständiges Wärmeisolationsmaterial. US 4,600,437 betrifft ein anorganisches Material mit großer Wasserbeständigkeit. Die WO 2004/110951 A1 betrifft ein mehrschichtiges Feuerschutzsystem. Die EP 1 106 315 A2 betrifft ein Verfahren zur Erzeugung einer Selbstreinigungseigenschaft einer keramischen Oberfläche.

Ferner sind verzinkte metallische Rohre bekannt. Bei Temperaturen im Bereich von 1000° C über einen längeren Zeitraum von vier Stunden ergeben sich Probleme in Verbindung mit einer Beschädigung der Verzinkung. Stahlrohre haben ein sehr hohes spezifisches Gewicht und sind teuer. Im Zusammenhang mit feuchter Betriebsweise werden Stahlrohre durch die auftretenden sauren Kondensate angegriffen.

Ferner sind Kunststoffrohre bekannt, die jedoch eine geringe Temperaturbeständigkeit aufweisen, das heißt sie erweichen oder zersetzen sich bei höherer Temperatur.

Aufgabe der vorliegende Erfindung ist es, eine Kaminbaueinheit , insbesondere für den Kaminbau und/oder den Transport von entzündlichen und/oder heißen Flüssigkeiten und/oder Gasen, bereitzustellen, welche einfach, d.h. ohne Brennvorgang und kostengünstig herstellbar ist, eine ausgezeichnete Korrosionsbeständigkeit und vorzugsweise ein geringes spezifisches Gewicht aufweist. Ferner sollte die Kaminbaueinheit vorzugsweise mit einer geringen Wandstärke herstellbar sein. Ziel ist es auch, eine Kaminbaueinheit bereitzustellen, welches keine Risse aufweist.

Eine weitere Aufgabe der vorliegenden Erfindung ist es, feuerbeständige Rohre und ein Verfahren zur Herstellung von feuerbeständigen Rohren bereitzustellen, wobei die Rohre vorzugsweise kostengünstig sein sollen, ein geringes spezifisches Gewicht aufweisen sollen und/oder die EN-Normen für Rauchgasrohre erfüllen sollen.

Die vorstehende Aufgabe wird durch eine Kaminbaueinheit gemäß Anspruch 1 gelöst.

Bevorzugte Weiterbildungen der erfindungsgemäßen Kaminbaueinheit sind in den Ansprüchen 2 bis 23 angegeben.

Der erfindungsgemäße zu verwendende Faserverbundstoff ist vorzugsweise bis mindestens 1100°C, weiter bevorzugt bis zu 1200°C, temperaturbeständig. Mithin sind die aus diesem Faserverbundstoff hergestellten Formkörper, wie feuerbeständige Rohre ebenfalls vorzugsweise bis mindestens 1100°C temperaturbeständig.

Äußerst bevorzugt weist der erfindungsgemäß zu verwendende Faserverbundstoff keine signifikanten Risse und/oder durchgängigen Poren, vorzugsweise keine Risse und keine durchgängigen Poren, auf. Der erfindungsgemäß zu verwendende Faserverbundstoff weist mithin eine im wesentlichen geschlossene, vorzugsweise geschlossene, Matrix und/oder Oberfläche auf, so dass bei Verwendung dieses Faserverbundstoffes in einem Kaminrohr unter üblichen Betriebsbedingungen keine Feuchtigkeit, Kondensat und/oder Gase aus dem Rohrinneren durch die Rohrwandung nach außen gelangen. Der erfindungsgemäß zu verwendende Faserverbundstoff ist temperaturbeständig, insbesondere feuerbeständig, und weist keine intumeszierenden Eigenschaften auf. Der erfindungsgemäß zu verwendende Faserverbundstoff weist strukturell eine weitgehend homogene, vorzugsweise homogene, Struktur auf.

Überraschenderweise stellt die Kombination der in Anspruch 1 definierten Komponenten einen Faserverbundstoff bereit, welcher feuerbeständig ist und eine hohe Stabilität aufweist. Unerwarteterweise wirkt sich die Kombination der beiden Komponenten des Faserverbundstoffs synergetisch auf die für Rauchgasrohre erforderlichen Eigenschaften aus.

Weiter ist der Faserverbundstoff vorzugsweise mindestens sechs Stunden bei 500°C, weiter bevorzugt sowohl mindestens 30 min bei 1000°C als auch 6h bei 500°C, am meisten bevorzugt mindestens 6 Stunden bei 700°C sowie 30 min. bei 1000°C temperaturbeständig.

Erfindungsgemäß umfasst der in der erfindungsgemäßen Kaminbaueinheit verwendete Faserverbundstoff als Bindemittel auf Silikat-Basis aluminiumsilikatische Mineralstoffe. Als Materialien sind beispielsweise Alkalisilikate, Erdalkalisilikate, Alkalialumosilikate, Erdalkalialuminosilikate, Kombinationen und/oder Mischungen davon geeignet. Vorzugsweise handelt es sich um hydratisierte Silikate, insbesondere hydratisierte Aluminiumsilikate.

Bei einer Ausführungsform der Erfindung umfassen die in dem Bindemittel enthaltenen Stoffe einen oder mehrere Stoffe auf Silikat-Basis mit hydraulischen und/oder latent-hydraulischen Eigenschaften. Vorzugsweise weisen die hydraulischen und/oder latent-hydraulischen Stoffe auf Silikat-Basis in dem Bindemittel ein CaO:SiO₂-Gewichtsverhältnis aus einem Bereich von 0,5 bis 2,5, vorzugsweise von 1, 0 bis 2,0, auf. Vorzugsweise liegt das CaO:SiO₂-Gewichtsverhältnis in dem Bindemittel in einem Bereich von 0,5 bis 1,5 bei latent-hydraulischen Stoffen und von 1,5 bis 2,5 bei hydraulischen Stoffen.

Bei einer Ausführungsform ist das Bindemittel aus hydraulischen und/oder latent-hydraulischen aluminiumsilikatischen Mineralstoffen und mindestens einer alkalischen Verbindung herstellbar.

Vorzugsweise ist die alkalische Verbindung aus der Gruppe, bestehend aus NaOH, KOH, Ca(OH)₂, Mg(OH)₂, Wasserglas und Mischungen davon, ausgewählt. Alkalische Wassergläser sind vorzugsweise geeignet. Unter Wasserglas werden vorzugsweise Verbindungen mit der Formel M₂O · n SiO₂ verstanden, wobei M vorzugsweise für Li, Na, K und Mischungen davon steht. Äußerst bevorzugt steht M für K. Ein Verhältnis des Gesamtgewichtes von SiO₂ zu K₂O in dem Bindemittel aus einem Bereich von 0,5 bis 2,0, insbesondere von 0,5 bis 0,8, ist dabei besonders bevorzugt.

Bei einer Ausführungsform ist der aluminiumsilikatische Mineralstoff ein Neben- oder Abfallprodukt aus thermischen industriellen Prozessen, wie z.B. der Energiegewinnung aus fossilen Brennstoffen oder der Stahlerzeugung, Hochofenschlacken, Kesselsanden, Flugaschen, feinen Gesteinsstäuben, Tonerdeverbindungen, Puzzolanen, Kaolintonen, Metakaolinen, oder eine Mischung davon. Vorzugsweise werden diese Stoffe in granulierter Form eingesetzt. Besonders bevorzugt wird Flugasche, vorzugsweise Braunkohlenflugasche, eingesetzt. Gemäß einer weiteren Ausführungsform können auch synthetische Aluminiumsilikate verwendet werden.

Gemäß einer bevorzugten Weiterbildung der Erfindung liegt der Calciumgehalt, berechnet als CaO, in dem Bindemittel in einem Bereich von 0,025 bis 14 Gew.-%, weiter bevorzugt von 0,05 bis 9 Gew.-%, noch weiter bevorzugt von 0,1 bis 5 Gew.-% oder 0,5 bis 3 Gew.-%, jeweils bezogen auf das Gesamtgewicht des Bindemittels auf Silikatbasis.

Gemäß einer bevorzugten Weiterbildung der Erfindung liegt der Siliciumgehalt, berechnet als SiO₂, in dem Bindemittel in einem Bereich von 40 bis 95 Gew.-%, weiter bevorzugt von 51 bis 91 Gew.-%, noch weiter bevorzugt von 60 bis 86 Gew.-% noch weiter bevorzugt von 65 bis 81 Gew.-%, noch weiter bevorzugt von 69 bis 76 Gew.-%, jeweils bezogen auf das Gesamtgewicht des Bindemittels auf Silikatbasis.

Bei dem auf 100 Gew.-% des Bindemittels auf Silikatbasis fehlenden Rest handelt es sich beispielsweise um Metalloxide, wie zum Beispiel Aluminiumoxide, Eisenoxide, Manganoxide, Natriumoxide, Kaliumoxide, Titanoxide, Magnesiumoxide, etc.. Es können aber auch Phosphatverbindungen, etc. enthalten sein.

Vorzugsweise umfasst das Bindemittel mit den vorstehend angegebenen Mengenanteile aluminiumsilikatische Mineralstoffe.

Bei einer bevorzugten Ausführungsform weist das hydraulische und/oder latent-hydraulische mineralische Aluminiumsilikat einen CaO-Gehalt von bis 2 zu 20 Gew.-% sowie einen SiO₂-Gehalt von mehr als 40 Gew.-%, bezogen auf das Gesamtgewicht des Aluminiumsilikats, auf. Als besonders geeignet haben sich Braunkohlenflugaschen und/oder der Zusatz von hydraulisch härtendem Kalk erwiesen.

Die Reaktion des mindestens einen hydraulischen und/oder latent-hydraulischen mineralischen Aluminiumsilikats mit der vorzugsweise verwendeten mindestens einen alkalischen Verbindung erfolgt unter Wasserabspaltung. Es handelt sich um eine Polykondensationsreaktion unter Bildung eines dreidimensionalen Netzwerks aus SiO₄- und AlO₄-Tetraedern. Hierdurch entsteht ein keramikähnlicher Stoff ohne Brennvorgang.

Der erfindungsgemäße, bis mindestens 1000°C temperaturbeständige Faserverbundstoff weist mithin ein dreidimensionales Netzwerk aus SiO₄- und AlO₄-Tetraedern auf.

Vorzugsweise ist die alkalische Verbindung eine Flüssigkomponente und/oder das hydraulische oder latent-hydraulische mineralische Aluminiumsilikat eine Feststoffkomponente. Die Mischung kann von leicht fließfähig bis harzähnlich viskos eingestellt werden. Als alkalische Verbindung kann ein Kaliumsilikat, in welchem die Komponenten SiO₂ und K₂O in einem Massenverhältnis von 0,5 bis 2,0, vorzugsweise von 0,5 bis 0,8, vorliegen, eingesetzt werden.

Beispielsweise ist als alkalische Verbindung GP 102 A und/oder als latenthydraulisches mineralisches Aluminiumsilikat GP 140B von der Firma Pyromeral Systems, F-60722 Pont Sainte Maxence Cedex, Frankreich geeignet.

Die Reaktion des hydraulischen und/oder latent-hydraulischen mineralischen Aluminiumsilikates und mindestens einer alkalischen Verbindung erfolgt bei alkalischem pH-Wert. Die Reaktion erfolgt vorzugsweise bei einer Temperatur in dem Bereich von 20°C bis 90°C. Vorzugsweise dauert die Reaktion, d.h. die Härtung, Minuten bis Stunden. Bei einer Ausführungsform erfolgt die Reaktion unter Einstrahlung von Mikrowelleneinstrahlung. Bei Auslösung der Reaktion durch Mikrowellenstrahlung wird, liegt die Reaktionszeit im Bereich von 5 bis 25 sec. Falls die Reaktion bei Raumtemperatur erfolgt, liegt die Härtungszeit in einem Bereich von 15 bis 20h.

Bei einer Ausführungsform umfasst das anorganische Fasermaterial Basaltfasern, Carbonfasern, Bornitridfasern, langfaserige Wollastonit-Fasern und/oder Keramikfasern. Als Keramikfasern kommen beispielsweise Aluminiumoxidfasern, Mullite-Fasern, SiC-Fasern, SiCN-Fasern und/oder SiBCN-Fasern in Betracht.

Glasfasern kommen ebenfalls in Betracht, weisen jedoch eine geringe thermische Stabilität auf und sind in dem alkalischen Bindemittel nicht korrosionsfest.

Besonders bevorzugt sind Basaltfasern. Basaltfasern sind oxidationsunempfindlich und preiswert. Basaltfasern sind gegenüber Sauerstoff, Luft, oxidierenden Medien und Säuren bis zu einem hohen Grad unempfindlich. Sie besitzen zudem eine ausgezeichnete Beständigkeit in alkalischem Milieu.

Bei einer Ausführungsform weisen die Basaltfasern folgende Zusammensetzung auf:

| | |
|---|---|
| SiO₂ | 50 bis 55 Gew.-% |
| Al₂O₃ | 12 bis 17 Gew.-% |
| CaO | 5 bis 10 Gew.-%; vorzugsweise 6 bis 8 Gew.-%, |
| MgO | 4 bis 9 Gew.-%, vorzugsweise 6 bis 8 Gew.-%, |
| Fe₂O₃ | 5 bis 15 Gew,-%, vorzugsweise 8 bis 12 Gew.-%, |
| Na₂O + K₂O | 2 bis 5 Gew.-% und/oder |
| TiO₂ | 0,5 bis 2,5 Gew.-%, |

bezogen auf das Gesamtgewicht der Basaltfasern.

Das anorganische Fasermaterial kann als Gewebe, Vlies, Roving, Matte oder geschnittene Kurzfaser ("chopped strand") ausgebildet sein.

Bei einer Ausführungsform des Faserverbundwerkstoffes werden die anorganischen Fasern, vorzugsweise die Basaltfasern, als Endlosfasern in Form von Rovings, vorzugsweise mit einer Texzahl (Gewicht des Faserrovings in g pro 1000m Rovinglänge in [g/km]) von 1500 bis 3500, vorzugsweise von 2000 bis 2800, am meisten bevorzugt von 2200 bis 2600, eingesetzt.

Dabei besitzen die eingesetzten Faserrovings eine Steifigkeit von bevorzugt mehr als 100 mm, gemessen nach ISO 3375. Bei einer Ausführungsform weisen die anorganischen Fasern, vorzugsweise Faserrovings, einen Feuchtegehalt von max. 2 Gew.-%, bezogen auf das Gewicht der anorganischen Fasern auf.

Als Basaltfasern sind beispielsweise textile Endlos-Basaltfaserrovings der Firma Asamer Basaltics Fibers GmbH, Unterthalharnstr 2, A-4696 Ohlsdorf, Österreich geeignet.

Ein Faser-Roving ist derart ausgebildet, dass er sich aus einer Anzahl von sogenannten Strands, welche ihrerseits wiederum aus einer Vielzahl von Fasereinzelfilamenten bestehen, zusammensetzt. Eine derartige Ausgestaltung ist vorteilhaft, weil ein solcher Roving eine gute Schneidbarkeit aufweist. Beim Schneidevorgang zerfällt der Roving in Kurzfasern oder "chopped strands" mit definierter Gestalt, wobei die Kurzfasern oder "chopped strands geeignet sind, in einer Matrix ein regellos angeordnetes Gebilde und eine gleichmäßige Verteilung einzunehmen. Weiter weisen die Fasereinzelelemente, welche die Strands bilden, bevorzugt einen guten mechanischen Zusammenhalt auf, so dass sie beim Schneidevorgang und beim Einbringen in die Matrix nicht zum Zerfallen neigen. Die Matrix wird bei dem erfindungsgemäßen Faserverbundstoff durch das erfindungsgemäß zu verwendende Bindemittel sowie etwaige Zusatzstoffe, Füllstoffe, Additive, etc. gebildet.

Die Texzahl der Strands liegt vorteilhaft im Bereich von 20 - 250 tex, weiter bevorzugt von 50 bis 180 tex.

Beispielsweise kann ein Faserroving mit einer Gesamttexzahl von 2400 insgesamt zehn Strands mit einer Texzahl von jeweils 240 aufweisen.

Bei einer weiteren bevorzugten Ausführungsform werden die anorganischen Fasern direkt in Form von Kurzfasern im Faserverbundwerkstoff eingesetzt. Bevorzugt können die Kurzfasern dabei aus einem wie vor beschriebenen Faserrovings durch Schneiden erzeugt werden.

Die zum Einsatz kommenden Faserrovings bzw. Kurzfasern weisen als kleinste Einheit Fasereinzelfilamente mit einem bevorzugten Durchmesser von 5 bis 25 µm auf, weiter bevorzugt liegt deren Durchmesser zwischen 9 und 17 mm.

Im Falle der Kurzfasern ("chopped strands") weisen diese bevorzugt eine Länge im Bereich von 1 - 120 mm auf. Bei einer Ausführungsform weisen die Kurzfasern eine Länge in einem Bereich von 2 mm bis 30 mm, vorzugsweise in einem Bereich von 3 bis 16 mm, weiter bevorzugt in einem Bereich von 5 mm bis 10 mm, auf. Bei einer anderen Ausführungsform weisen die Kurzfasern eine Länge in einem Bereich von 50 bis 60 mm auf.

Vorzugsweise umfasst das anorganische Fasermaterial Fasern mit einer mittleren Dicke in einem Bereich von 5 bis 25 µm, vorzugsweise in einem Bereich von 9 bis 17 µm. Bei einer Ausführungsform ist das anorganische Fasermaterial als geschnittene Kurzfaser ("chopped strands") mit einer Länge in einem Bereich von 1 bis 120 mm ausgebildet. Bei einer Ausführungsform weisen die Fasern eine Länge in einem Bereich von 2 mm bis 30 mm, vorzugsweise in einem Bereich von 3 bis 16 mm.

Gemäß einer bevorzugten Weiterbildung der Erfindung sind die verwendeten anorganischen Fasern nichtmetallische Fasern, vorzugsweise mineralische Fasern.

Der Faserverbundstoff enthält vorzugsweise 2 bis 30 Gew.-%, vorzugsweise 2 bis 20 Gew.-%, anorganisches Fasermaterial, jeweils bezogen auf das Gesamtgewicht des Faserverbundstoffs.

Durch das anorganische Fasermaterial kann vorteilhafterweise die Schrumpfung des Faserverbundstoffes beim Aushärten verringert oder vermieden werden.

Vorzugsweise ist das anorganische Fasermaterial oxidationsunempfindlich und alkalibeständig.

Erfindungsgemäß ist auf das anorganische Fasermaterial des Faserverbundstoffs eine Schlichte aufgebracht, die eine Haftvermittlungsschicht, Dispergiermittelschicht und/oder eine Antikorrosionsschicht ausbildet. Als geeignete Schlichte haben sich Silanverbindungen erwiesen, die unter Abspaltung von Wasser zwischen den Hydroxygruppen der Fasern und den SiOH-Gruppen des Haftvermittlers abbinden. Anstelle der Silanverbindungen können auch Epoxyverbindungen eingesetzt werden. Erfindungsgemäß umfasst die Schlichte ein Silan, insbesondere ein organisches Aminosilan, und/oder ein Epoxid, insbesondere Epoxyorganosilan, oder besteht daraus. Ein geeignetes Silan ist beispielsweise 3- Aminopropyltriethoxysilan.

Erfindungsgemäß umfasst der Faserverbundstoff ferner mindestens ein reaktives und/oder inaktives Additiv. Unter dem Begriff inaktiv ist auch inert zu verstehen.

Unter reaktiven Additiven sind einerseits Stoffe zu verstehen, welche die Polykondensationsreaktion des latent-hydraulischen und/oder hydraulischen aluminiumsilikatischen Mineralstoffs in ihrem Verlauf beeinflussen, beispielsweise beschleunigen können. Sie können daher auch als Reaktionsbeschleuniger bezeichnet werden. Gleichzeitig können die reaktiven Additive auch die Schrumpfung und/oder Rissbildung des Faserverbundstoffes bei der Härtungsreaktion des Bindmittels verringern und/oder verhindern.

Beispielsweise können als reaktive Additive CaO bzw. aktives CaO-enthaltende Verbindungen eingesetzt werden. Als aktive CaO-enthaltende Verbindungen sind beispielsweise hydraulische Kalke geeignet. Um die Bildung von Rissen in dem Faserverbundstoff zu vermeiden, liegt das Verhältnis, vorzugsweise das molare Verhältnis, von (K + Ca)/Al vorzugsweise in einem Bereich von 1,5:1 bis 2,0:1. Als sehr geeignet hat sich ein CaO-Anteil von 5 bis 15 Gew.-%, vorzugsweise von 7 bis 10 Gew.-%, bezogen auf das Gesamtgewicht des Bindemittels, erwiesen.

Eine weitere Variante von Additiven, welche beispielsweise zum Einsatz kommen kann, hat eine verflüssigende Wirkung auf die fertig gemischten Ausgangskomponenten zur Folge. Diese verflüssigende Wirkung ermöglicht es, bei gleichen Verarbeitungseigenschaften den Wassergehalt der eingesetzten Alkalisilikatlösung zu reduzieren. Durch den geringeren Wassergehalt wird im Faserverbundstoff eine vergleichsweise geringere Restporosität und verbesserte Druckfestigkeit erzielt. Beispielsweise handelt es sich bei dieser Art von reaktiven Additiven um Phosphate der Alkalimetalle, beispielsweise des Natriums.

Des weiteren können beispielsweise auch reaktive Additive zum Einsatz kommen, welche die Geschwindigkeit der Polykondensationsreaktion des Aluminiumsilikates mit der alkalischen Komponente auf ein für das jeweils zur Anwendung kommende Fertigungsverfahren vorteilhaftes Maß einstellen. Diese Additive beteiligen sich an der Kondensationsreaktion, indem sie sich zu mindestens teilweise in das alumosilikatische Netzwerk einbauen. Sie sind somit zusätzlich in der Lage, die chemischen Eigenschaften wie z.B. die Beständigkeit gegen schwächer saure bis neutrale Medien zu verbessern. Bevorzugt handelt es sich bei dieser Art von Additiven um gefällte Phosphate des Aluminiums. Diese stehen mit unterschiedlichen Kondensationsgraden zur Verfügung, wodurch unterschiedlich starke verbesserte Ausprägungen der o.g. Eigenschaften erzielbar sind und somit eine dem vorgesehenen Fertigungsverfahren und Produktspezifikationen entsprechende Variante zur Anwendung kommen kann. Als geeignet haben sich z.B. erwiesen die Aluminiumphosphatzubereitungen der chemischen Fabrik Budenheim mit den Handelsbezeichnungen Fabutit 748, Fabutit 758, Fabutit 574, Fabutit 206 sowie Fabutit 305.

Zum Beispiel umfasst das Bindemittel bis zu 10 Gew.-% eines Aluminiumphosphates mit einem Gehalt an P205 von 78 %, beispielsweise Fabutit 758.

Unter inaktiven Additiven sind Stoffe zu verstehen, welche weder mit dem latent-hydraulischen und/oder hydraulischen mineralischen Aluminiumsilikat noch mit einer alkalischen Verbindung eine chemische Reaktion eingehen. Die inaktiven Additive haben vorzugsweise die Funktion eines Viskositätsreglers und/oder verhindern ebenfalls die Schrumpfung und/oder die Bildung von Rissen bei der Reaktionshärtung des Bindemittels.

Beispielsweise können als inaktive Additive Schamottepulver, Ziegelstaub Quarzmehl eingesetzt werden. Vorzugsweise weisen 60 bis 80 Gew.-% der inaktiven Partikel eine Partikelgröße von 0,1 bis 1,6 mm auf und bis zu 30 Gew.-% der inaktiven Partikel weisen eine Partikelgröße von < 0,1 mm auf.

Gemäß einer bevorzugten Ausführungsform liegt der Anteil an inaktiven Additiven in einem Bereich von 10 bis 80 Gew.-%, weiter bevorzugt von 20 bis 40 Gew.-%, jeweils bezogen auf das Gesamtgewicht des Faserverbundstoffes.

Der Gehalt sämtlicher in dem erfindungsgemäßen Faserverbundstoff verwendeten Komponenten addiert sich jeweils auf 100 Gew.-%.

Bei einer bevorzugten Ausführungsform erfolgt die Aushärtung des Bindemittels bei einer Luftfeuchtigkeit von mindestens 80%, vorzugsweise von mindestens 90% am meisten bevorzugt von mindestens 97%. Um eine vorzeitige Austrocknung zu vermeiden, kann das Material vorzugsweise während der Aushärtung in eine wasserdampfdichte Folie eingepackt werden.

Je nach Herstellungsverfahren der Kaminbaueinheit, z.B. eines Rauchgasrohres, kann die Rezeptur des Faserverbundstoffes dünnflüssig (Gießen) oder dickflüssig (Imprägnieren) eingestellt werden.

Bei einer Ausführungsform umfasst der vorzugsweise mindestens bis 1000°C temperaturbeständige Faserverbundstoff
mindestens ein Bindemittel auf Silikat-Basis
mindestens ein anorganisches Fasermaterial,
mindestens ein inaktives Additiv und/oder
mindestens ein reaktives Additiv,
wie in Anspruch 1 spezifiziert.

Der Faserverbundstoff kann zur Herstellung von feuer- und temperaturbeständigen Rohren verwendet werden. Ferner ist der Faserverbundstoff allgemein auch zur Herstellung von feuer- und temperaturbeständigen Formkörpern wie Profilen, Platten, Formstücken und/oder Verstärkungsmaterialien geeignet.

Die Aufgabe wird ferner durch eine feuerbeständige und temperaturbeständige Kaminbaueinheit gemäß Anspruch 1, vorzugsweise Rauchgasrohr eines Kamins, gelöst.

Bei einer Ausführungsform ist die feuerbeständige und temperaturbeständige Kaminbaueinheit ein Rohr, das aus Muffenrohren zusammengesetzt ist. Vorzugsweise weist die Muffe eines Rohres eine Höhe von mindestens 10 mm auf.

Bei einer Ausführungsform weist das feuerbeständige und temperaturbeständige Rohr eine Temperaturbeständigkeit von bevorzugt sechs Stunden bei 500°C und 30 min. bei 1000°C und bei einer weiteren bevorzugten Ausführungsform sechs Stunden bei 700°C und 30 min. bei 1000°C auf.

Bei einer Ausführungsform weist das feuerbeständige Rohr eine Rohdichte von kleiner als 2,3 g/cm³, vorzugsweise kleiner 2,1 g/cm³, weiter bevorzugt von kleiner als 1,8 g/cm³, auf.

Bei einer Ausführungsform weist das feuerbeständige Rohr eine Wandstärke von weniger als 8 mm, am meisten bevorzugt von weniger als 5 mm, auf. Bei einer Ausführungsform weist das feuerbeständige Rohr einen Innendurchmesser in einem Bereich von 60 bis 600 mm, vorzugsweise in einem Bereich von 80 bis 250 mm, sowie vorzugsweise eine Wandstärke von weniger als 8 mm, vorzugsweise weniger als 5 mm, auf.

Bei einer Ausführungsform erfüllt das feuerbeständige Rohr die EN 1457, vorzugsweise die am 14. März 2008 geltende DIN EN 1457-Norm.

Bei einer Ausführungsform weist das feuerbeständige Rohr bei der Prüfung nach DIN EN 1457 einen k & d Wert von kleiner als 2 g/(m² · h) auf. Der k & d definiert den Durchgang von kapillarem und diffusem Wasserdampf vom Inneren des Rohres durch die Rohrwand nach außen.

Der erfindungsgemäß zu verwendende Faserverbundstoff sowie die aus dem erfindungsgemäßen Faserverbundstoff hergestellte Kaminbaueinheit, wie beispielsweise eine feuerbeständiges Rohr, z.B. Rauchgasrohr, ist bzw. sind überraschenderweise bis wenigstens 1000°C temperaturbeständig und weisen vorzugsweise zugleich einen k & d Wert von kleiner als 2 g/(m² · h) auf. Diese bevorzugte Kombination dieser Werkstoffeigenschaften ist äußerst vorteilhaft.

Das feuerbeständige Rohr kann als Rauchgasrohr beispielsweise in Kaminen und/oder als Rohr für brennbare Flüssigkeiten und/oder heiße Flüssigkeiten und Gase verwendet werden.

Als Verfahren zur Herstellung einer Kaminbaueinheit wie einem feuerbeständigen Rohr kann mindestens eines der folgenden Verfahren eingesetzt werden:
a) Gießverfahren
b) Pultrusionsverfahren
c) Wickelverfahren
d) Schleuderrohrtechnikverfahren und/oder
e) Imprägnierverfahren.

Mit dem erfindungsgemäßen Verfahren können feuerbeständige Rohre vorzugsweise mit Wandstärken unter 8 mm, vorzugsweise von weniger als 5 mm, erhalten werden.

Bei einer Ausführungsform wird in einem Gießverfahren das Bindemittel auf Silikat-Basis, das anorganische Fasermaterial und ggf. die Additive vermischt, die Mischung wird in Formen, vorzugsweise Kunststoffformen, gegossen und aushärten gelassen. Dieses Verfahren ist sehr kostengünstig.

Bei einer Ausführungsform werden in einem Pultrusionsverfahren Faserrovings, Vliese und/oder Gewebe aus einem anorganischen Fasermaterial über eine Tauchwalze durch eine mit einem Bad mit Bindemittel auf Silikat-Basis und ggf. mit Additiven gefüllte Trägerwanne und durch eine nachfolgende Formstation gezogen und anschließend ausgehärtet.

Bei einer Ausführungsform werden in einem Wickelverfahren Faser-Rovings, Fasermatten und/oder Gewebestreifen aus einem anorganischen Fasermaterial mit einem Bad, umfassend Bindemittel auf Silikat-Basis und ggf. Additive getränkt, auf einen rotierenden Kern aufgewickelt und ausgehärtet.

Bei einer Ausführungsform werden in einem Schleuderrohrtechnikverfahren durch eine Spritzlanze in ein rotierende Metallrohrform einer flüssigen Mischung aus Bindemittel auf Silikat-Basis, anorganischem Fasermaterial und ggf. Additiven eingedüst, wobei das Rohr, vorzugsweise schichtweise, aufgebaut wird und anschließend das Rohr getrocknet wird.

Die einzelnen konzentrischen Schichten der Rohrwandung können dabei durch unterschiedliche Zusammensetzung bezüglich des Zuschlag- und/oder Fasergehaltes und/oder der chemischen Zusammensetzung gekennzeichnet sein. Der schichtweise Aufbau der Rohrwand kann auch schrittweise derart erfolgen, dass eine partielle Aushärtung der einzelnen Schichten erfolgt. Hierbei kann die Zusammensetzung der einzelnen Schichten derart variiert werden, dass diese im Verbund einen funktionellen Aufbau ergeben. Beispielsweise kann die innere Schicht eine säureresistente und gasdichte Schicht, die mittlere eine statisch wirksame Schicht und die äußere Schicht eine verschleißbeständige Schicht sein, wobei schichtweise der Fasergehalt und/oder der Zuschlaganteil und/oder die chemische Zusammensetzung entsprechend den Erfordernissen variiert wird.

Der Aufbau kann innenrohrseitig oder außenrohrseitig erfolgen. Dabei kann jeweils die Innenrohrwand bzw. die Außenrohrwand der Metallrohrform vor dem Aufbringen der Mischung hydrophobiert werden. Es können geschnittene Faser-Rovings ("chopped strands") verwendet werden. Alternativ zu den geschnittenen Fasern können diese auch in Form von einer oder mehreren Lagen von Gewebematten vorliegen.

Bei einer Ausführungsform werden in einem imprägnierverfahren Fasergewebe und/oder Vliese aus einem anorganischen Fasermaterial, in einem Bad enthaltend Bindemittel auf Silikat-Basis und ggf, Additive getränkt, bei Temperaturen vorzugsweise von 50 bis 120, beispielsweise 60°C vorgetrocknet und anschließend bei 100 bis 150°C unter einem Druck von vorzugsweise 1 bis 5 bar verpresst. Nach dem Trocknen kann das Zwischenprodukt (Halbzeug-Prepregs) kühl beispielsweise bei unter 10 °C gelagert werden.

Als besonders geeignet haben sich das Imprägnierverfahren, das Wickelverfahren und/oder das Pultrusionsverfahren erwiesen. Hier können die meisten Gewichtseinsparungen bei dem herzustellenden Formkörper, beispielsweise Rauchgasrohr, erreicht werden.

Als Bindemittel, Fasern und Additive sind die vorstehend beschriebenen Materialien geeignet.

Durch die nachfolgenden Beispiele soll die vorliegende Erfindung näher erläutert, aber in keiner Weise beschränkt werden.

### Beispiel 1

### (Herstellung Faserverbundwerkstoff zur Herstellung eines unbrennbaren und temperaturbeständigen Rohrs)

Zur Herstellung eines unbrennbaren und temperaturbeständigen Rohres werden folgende Komponenten zusammengemischt:

| | |
|---|---|
| 1400g | Kaliumsilikatlösung mit einem Wassergehalt von 60 Gew.-%, bezogen auf das Gesamtgewicht (Produkt 102 A, Pyromeral Systems, Pont-Sainte-Maxence) |
| 1160 g | Aluminiumsilikat (Produkt 140 B, Pyromeral Systems, Pont-Sainte-Maxence) |
| 180 g | Basaltfasern (Endlos-Basaltfasern der Firma Asamer Basaltics Fibers GmbH, Unterthalharnstr 2, A- 4696 Ohlsdorf, Österreich) |

300 g Schamottepulver mit folgender Siebkurve: 200 g der Partikel des Schamottepulvers liegen in einem Größenbereich von 0,6 bis 1,2 mm und 100 g der Partikel des Schamottepulvers liegen in einem Größenbereich von 0 - 0,63 mm. Die Kaliumsilikatlösung hatte dabei folgende chemische Zusammensetzung in [Gew.-%] :

| | |
|---|---|
| Al₂O₃ | 0,04% |
| SiO₂ | 14,91% |
| Fe₂O₃ | 0,00% |
| MnO | 0,00% |
| Na₂O | 0,12% |
| K₂O | 25,33% |
| TiO₂ | 0,00% |
| P₂O₅ | 0,00% |
| MgO | 0,02% |
| CaO | 0,00% |
| Glühverlust | 59,93% |

Das Aluminiumsilikat wies folgende Zusammensetzung in [Gew.-%] auf :

| | |
|---|---|
| Al₂O₃ | 23,37% |
| SiO₂ | 71,39% |
| Fe₂O₃ | 0,23% |
| MnO | 0,01% |
| Na₂O | 0,07% |
| K₂O | 1,81% |
| TiO₂ | 0,15% |
| P₂O₅ | 0,16% |
| MgO | 0,14% |
| CaO | 0,08% |
| Glühverlust | 2,11% |

Während des Mischens stieg die Temperatur auf ca. 40 °C an. Anschließend wurde die erhaltenen Mischung in eine Form gegossen und bei Raumtemperatur 12 h getrocknet, um das unbrennbare Rohr zu härten. Alternativ wurde die Form bei 100 °C 2 h getrocknet. Durch Einstrahlung von Mikrowellen ist innerhalb von 5 bis 10 sec eine Härtung möglich. Es wurde ein Rohr mit einem Innendurchmesser von 140 mm, einer Wanddicke von 4 mm und einer Länge von 1 m mit einem Gewicht von 2500 g und einer Druckfestigkeit von 8 N/mm² erhalten.

### Beispiel 2

### Zur Herstellung einer modifizierten Variante des Faserverbundstoffes wurden gemischt:

280 g Kaliumsilikatlösung mit einem Masseverhältnis an SiO₂/K₂O von 0,6 und einem Wassergehalt von 60 %, bezogen auf das Gesamtgewicht (Produkt 102 A, Pyromeral Systems, Pont-Sainte-Maxence).
220 g Aluminiumsilikat (Produkt 140 B, Pyromeral Systems, Pont-Sainte-Maxence)
15 g Basaltfasern (Endlos-Basaltfasern der Firma Asamer Basaltics Fibers GmbH, Unterthalharnstr. 2, A-4696 Ohlsdorf, Österreich)
350 g Schamottepulver mit einer Siebkurve von 0 bis 1,6 mm
150 g Schamottepulver mit einer Siebkurve von kleiner als 0,1 mm
25,0g Fabutit 758 der Fa. Chemische Fabrik Budenheim KG

Es wurde ein unbrennbares Material erhalten, welches ohne Rissbildung Temperaturen bis wenigstens 1000°C widerstehen kann.

Im nachfolgenden werden Ausführungsbeispiele der Erfindung anhand von Figuren näher erläutert.

Dabei zeigen
- Figur 1: ein Ausführungsbeispiel einer Kaminbaueinheit im Längsschnitt entlang Linie I-I in Figur 2;
- Figur 2: eine Schnittdarstellung der Kaminbaueinheit entlang der Linie II-II in Figur 1;
- Figur 3: ein aus Muffenrohren zusammengesetztes Rauchgasrohr im Längsschnitt.

Figur 4 zeigt das Röntgendiffraktogramm eines Aluminiumsilikates GP 140 B, welches bei einer bevorzugten Ausführungsform zum Einsatz kommt.

Figur 5 zeigt das Röntgendiffraktogramm des Reaktionsproduktes des bei dieser einen bevorzugten Ausführungsform zum Einsatz kommenden alkalischen Komponente GP 102 A mit dem Aluminiumsilikat GP 140 B nach der Reaktionshärtung. Die Ausgangskomponente sowie die bei der Reaktion in dieser bevorzugten Ausführungsform gebildeten Produkte sind danach größtenteils röntgenamorph.

Fig. 6 zeigt das Röntgendiffraktogramm eines hydratisierten Zementes.

Die in den Figuren dargestellte Baueinheit stellt eine geschosshohe Kaminbaueinheit für einen Kamin eines Gebäudes dar.

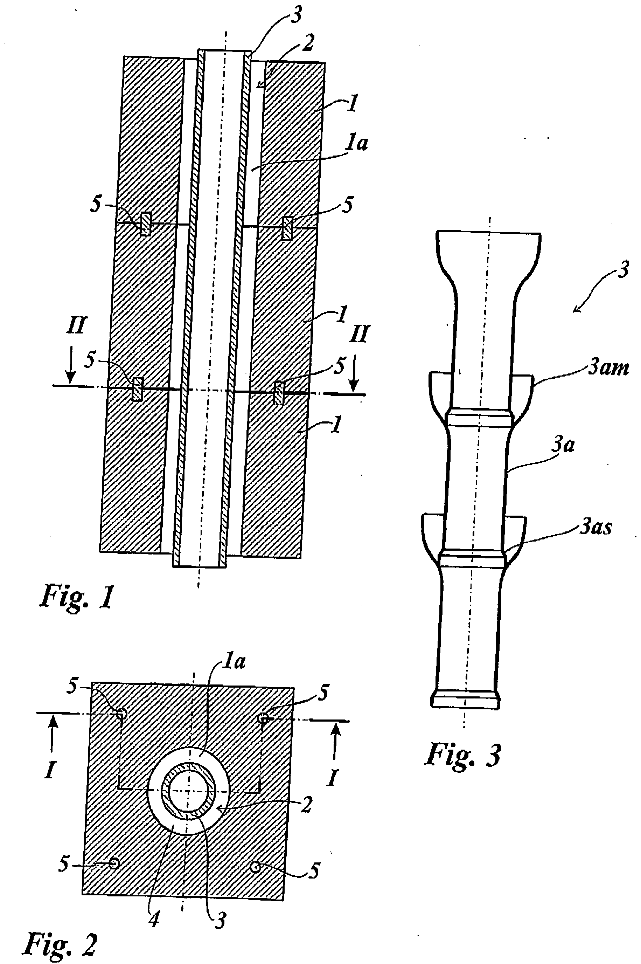

Die Kaminbaueinheit umfasst in der Darstellung der Figuren drei übereinander angeordnete Mantelsteine 1. Die Mantelsteine sind jeweils im wesentlichen würfelförmig. Jeder Mantelstein 1 weist einen zentralen Durchgangsraum 1a auf. Der Durchgangsraum ist in dem dargestellten Fall zylindrisch und in der vertikalen zentralen Achse des Mantelsteins 1 angeordnet. (siehe Fig. 1 und 2).

Die Mantelsteine 1 sind so übereinander angeordnet, dass die Durchgangsräume 1a in der Vertikalen miteinander fluchten und einen vertikalen zylindrischen Schacht 2 ausbilden. In dem Schacht 2 ist das Rauchgasrohr 3 angeordnet. Dabei ist zwischen der Innenwandung des Schachtes 2 und der Außenwandung des Rauchgasrohrs 3 ein lichter Ringspalt 4 (siehe Fig. 2) ausgebildet. Der Ringspalt 4 dient zur Zuluftführung zu nicht dargestellten Verbrennungsstätten, die an das Rauchgasrohr 3 über nicht dargestellte seitliche Verzweigungsstellen angeschlossen sind.

Das Rauchgasrohr 3 kann aus Muffenrohren zusammengesetzt sein, wie dies in Figur 3 dargestellt ist. Jedes Muffenrohr 3a weist ein Muffenende 3am und ein Spitzende 3as auf. Die Muffenrohre 3a sind zur Ausbildung des Rauchgasrohrs 3 so ausgebildet, dass das Muffenrohrende 3am jeweils am oberen Ende und das Spitzende 3as jeweils am unteren Ende ausgebildet ist. Der Innendurchmesser des Muffenendes 3am ist größer als das Spitzende 3as ausgebildet und zwar derart, dass in das Muffenende 3am das Spitzende 3as des darüber angeordneten Muffenrohrs 3a einsteckbar ist unter Zwischenschaltung eines Dichtmaterials und/oder Klebematerials.

Die übereinander angeordneten Mantelsteine 1 sind jeweils über Steckverbindungen 5 miteinander verbunden. Die Steckverbindungen sind jeweils im Bereich der vier Ecken der Oberseite und der Unterseite der Mantelsteine 1 angeordnet.

Die Kaminbaueinheit, wie sie in den Figuren 1 und 2 dargestellt ist, kann mit weiteren entsprechend aufgebauten Kaminbaueinheiten zu einem entsprechend höheren Kamin zusammengesetzt werden, Der Kamin kann, wie bereits erwähnt, mit nicht dargestellten Verbrennungsstätten verbunden sein. Hierbei wird die Zuluft für die Verbrennungsstätten über den Ringspalt 4 zugeführt und zwar in Form von Frischluft, die den Ringspalt in der Regel von oben nach unten durchströmt und also in der Regel im Gegenstrom zu den im Rauchgasrohr von unten nach oben strömenden Rauchgas aus den Verbrennungsstätten. Bei einem solchen Kamin handelt es sich um einen sogenannten LAS-Kamin.

Das Rauchgasrohr 3 bzw. die Muffenrohre 3a ist bzw. sind materialmäßig vorzugsweise aus Faserverbundstoff, der wie vorangehend erläutert ausgebildet sein kann.

Die Mantelsteine 1 bestehen vorzugsweise aus granuliertem porösen Füllstoff, der - wie vorangehend für bevorzugte Ausführungsbeispiele erörtert - ausgebildet sein kann.

Wie aus Figur 2 ersichtlich, ist bei dem in den Figuren dargestellten Ausführungsbeispiel der Ringraum 4 als lichter Ringspalt unmittelbar zwischen der Außenseite des Rauchgasrohrs 3 und der Innenseite des Mantelsteins 1 gebildet. Anders als bei herkömmlichen LAS-Kaminbaueinheiten ist also auf eine separate Dämmstoffschicht, die herkömmlich in der Regel als Ummantelung des Rauchgasrohrs 3 oder als Beschichtung der Innenwandung der Mantelsteine 1 ausgebildet ist, verzichtet. Grund hierfür ist bei dem dargestellten Ausführungsbeispiel, dass die Mantelsteine 1 aus dem genannten gut isolierenden Material ausgebildet sind. Das dargestellte Ausführungsbeispiel weist also, wie die Figuren zeigen, einen 2-schaligen Aufbau auf, bestehend aus einer ersten Schale, die durch den Mantelstein 1 gebildet wird und einer zweiten Schale, die durch das Rauchgasrohr 3 gebildet wird, wobei zwischen der ersten und der zweiten Schale der lichte Ringraum 4 zur Zuluftführung ausgebildet ist.

Bei demgegenüber abgewandelten Ausführungen kann jedoch auch ein 3-schaliger Aufbau realisiert werden, indem zusätzlich eine separate Dämmstoffschicht entweder als Ummantelung des Rauchgasrohrs 3 oder als Schicht auf der Innenseite der Mantelsteine 1 vorgesehen wird, Der Ringraum 4 kann dann zwischen der Außenseite der Ummantelung des Rauchgasrohrs 3 und der Innenwand der Mantelsteine 1 bzw. zwischen der Außenseite des Rauchgasrohrs 3 und der auf der Innenwand der Mantelsteine 1 angeordneten Dämmstoffschicht ausgebildet sei.

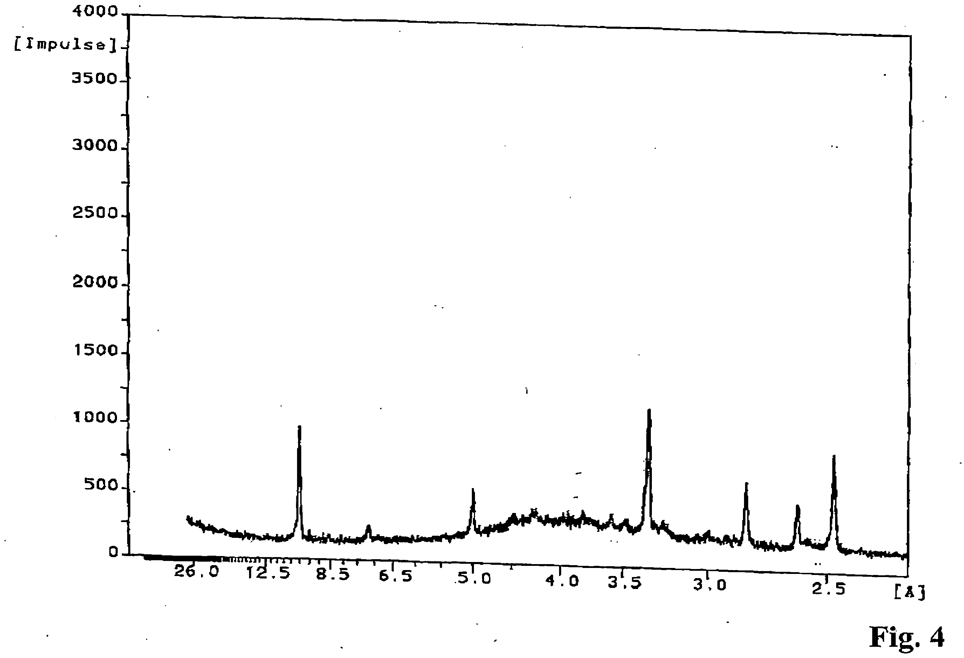

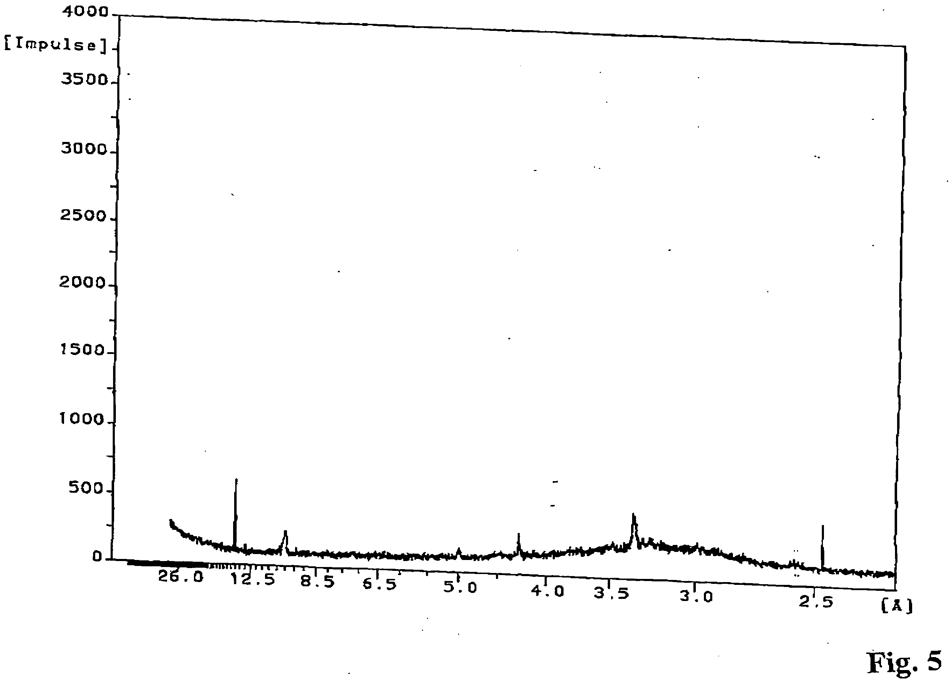

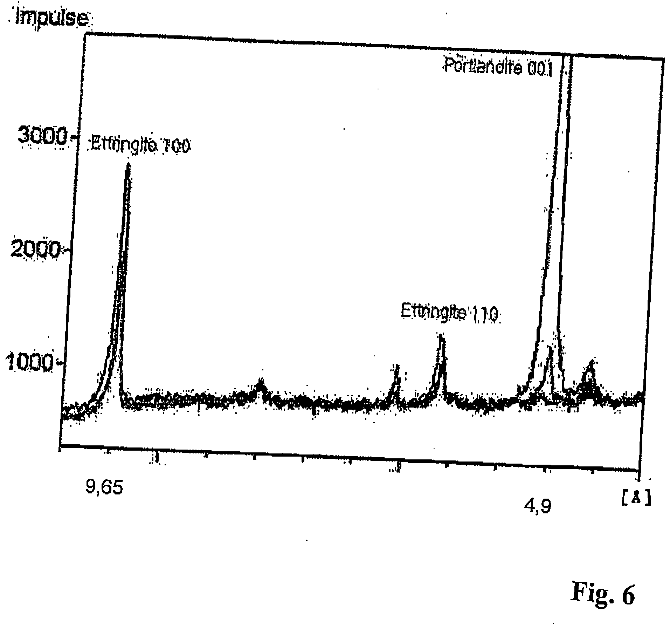

Aus den Figuren 4 und 5 ist ersichtlich, dass das eingesetzte Aluminiumsilikat (Fig. 4) unter Ausbildung einer weitgehend röntgenarmorphen Struktur (Fig. 5) umgesetzt wird. Aus Fig. 6 ist ersichtlich, dass ein hydratisierter Zement nicht röntgenamorph ist, sondern kristalline Anteile aufweist.

### Bezugszeichenliste

- 1: Mantelstein
- 1a: Durchgangsraum
- 2: vertikaler Schacht
- 3: Rauchgasrohr
- 3a: Muffenrohr
- 3am: Muffenende
- 3as: Spitzende
- 4: Ringspalt
- 5: Steckverbindung

## Patentansprüche

1. Kaminbaueinheit hergestellt aus einem Faserverbundstoff, welcher bis mindestens 1000°C temperaturbeständig ist und folgende Komponenten umfasst
- mindestens ein Bindemittel auf Silikat-Basis, wobei das Bindemittel aus alkalisch aktivierbaren aluminiumsilikatischen Mineralstoffen und mindestens einer alkalischen Verbindung herstellbar ist und einen Gesamt-Calciumgehalt als CaO von bis zu 20 Gew.-% sowie einen Gesamt-Siliciumgehalt als SiO₂ von mehr als 40 Gew.-% aufweist,
- mindestens ein anorganisches Fasermaterial, wobei auf dem anorganischen Fasermaterial eine mindestens ein Silan und/oder eine Epoxidverbindung umfassende Schlichte aufgebracht ist, die eine Haftvermittlungsschicht, Dispergiermittelschicht und/oder eine Antikorrosionsschicht ausbildet,
- mindestens ein chemisch inaktives Additiv und/oder
- mindestens ein chemisch reaktives Additiv.

2. Kaminbaueinheit nach Anspruch 1, wobei das Bindemittel auf Silikat-Basis vor dem Härten des Faserverbundstoffes hydraulische oder latent-hydraulische Eigenschaften aufweist.

3. Kaminbaueinheit nach einem der vorherigen Ansprüche, wobei der Faserverbundstoff eine alkalische Komponente umfasst, vorzugsweise eine wässrige Lösung aus Wasserglas, wobei der Gesamtgehalt an SiO₂ und K₂O im Wasserglas in einem Gewichtsverhältnis von SiO₂ / K₂O in einem Bereich von 0,5 bis 2,0 liegt.

4. Kaminbaueinheit nach einem der vorhergehenden Ansprüche, wobei das Bindemittel hydraulische oder latent-hydraulische aluminiumsilikatische Mineralstoffe mit einem CaO:SiO₂-Gewichtsverhältnis aus einem Bereich von 0,5 bis 2,5 aufweist.

5. Kaminbaueinheit nach einem der vorhergehenden Ansprüche 1 bis 4, wobei mindestens einer der aluminiumsilikatischen Mineralstoffe aus der Gruppe, die aus synthetischen Aluminiumsilikaten, Neben- oder Abfallprodukten von thermischen industriellen Prozessen, Neben- oder Abfallprodukten der Stahlerzeugung oder der Energiegewinnung aus fossilen Brennstoffen, Hochofenschlacken, Kesselsanden, Flugaschen, feinen Gesteinsstäuben, Tonerdeverbindungen, Puzzolanen, Kaolintonen, Metakaolinen und Mischungen davon besteht, ausgewählt wird.

6. Kaminbaueinheit nach einem der vorhergehenden Ansprüche, wobei das anorganische Fasermaterial Basaltfasern umfasst.

7. Kaminbaueinheit nach einem der vorhergehenden Ansprüche, wobei das anorganische Fasermaterial Kurzfasern mit einer Länge in einem Bereich von 1 mm bis 120 mm umfasst, wobei die Kurzfasern vorzugsweise eine Texzahl im Bereich von 20 bis 250 tex aufweisen und/oder die die Kurzfasern aufbauenden Fasereinzelfilamente einen Durchmesser in einem Bereich von 5 bis 25 µm aufweisen,
und/oder wobei das anorganische Fasermaterial Rovings, die eine Steifigkeit, gemessen nach ISO 3375, von mehr als 100 mm besitzen, umfasst
und/oder wobei das anorganische Fasermaterial in Form von Matten oder Geweben vorliegt.

8. Kaminbaueinheit nach einem der vorhergehenden Ansprüche, wobei die Schlichte aus mindestens einem Silan und/oder einer Epoxidverbindung besteht.

9. Kaminbaueinheit nach einem der vorhergehenden Ansprüche, wobei das inaktive Additiv Schamottepulver umfasst.

10. Kaminbaueinheit nach einem der vorhergehenden Ansprüche, wobei das reaktive Additiv Calciumoxid und/oder eine aktives CaO enthaltende Verbindung ist.

11. Kaminbaueinheit nach einem der vorhergehenden Ansprüche , wobei das reaktive Additiv ein Aluminiumphosphat ist.

12. Kaminbaueinheit nach einem der vorhergehenden Ansprüche, wobei das reaktive und/oder inaktive Additiv Partikel mit einem Partikeldurchmesser bis 1,2 mm umfasst.

13. Kaminbaueinheit nach einem der vorhergehenden Ansprüche, wobei das reaktive Additiv und/oder inaktive Additiv die Schrumpfung des Bindemittels bei der Reaktionshärtung des Faserverbundstoffes reduziert und/oder verhindert und/oder die Reaktionshärtung beschleunigt.

14. Kaminbaueinheit nach einem der vorhergehenden Ansprüche, wobei in dem Bindemittel die Elemente Kalium, Calcium und Aluminium in einem molaren Verhältnis von (K + Ca)/Al in einem Bereich von 1,5 : 1 bis 2,0 : 1 vorliegen.

15. Kaminbaueinheit nach einem der vorhergehenden Ansprüche 1 bis 14, wobei die Reaktionshärtung der aluminiumsilikatischen Mineralstoffe und der mindestens einen alkalischen Verbindung bei Temperaturen zwischen 50 und 150°C erfolgt ist.

16. Kaminbaueinheit nach einem der vorherigen Ansprüche, wobei die Kaminbaueinheit ein feuerbeständiges Rohr, vorzugsweise Rauchgasrohr eines Kamins, ist.

17. Kaminbaueinheit nach Anspruch 16, wobei das Rohr aus Muffenrohren zusammengesetzt ist, wobei die Muffe eine Höhe von mehr als 10 mm aufweist.

18. Kaminbaueinheit nach einem der Ansprüche 16 oder 17, wobei das Rohr eine Temperaturbeständigkeit von mindestens sechs Stunden bei 500°C sowie 30 min bei 1000°C und vorzugsweise sechs Stunden bei 700°C und 30 min bei 1000°C aufweist.

19. Kaminbaueinheit nach einem der Ansprüche 16 bis 18, wobei das Rohr eine Trockenrohdichte von kleiner als 2,3 g/cm³, vorzugsweise kleiner 2,1 g/cm³, aufweist.

20. Kaminbaueinheit nach einem der Ansprüche 16 bis 19, wobei das Rohr eine Wandstärke von weniger als 8 mm aufweist.

21. Kaminbaueinheit nach einem der Ansprüche 16 bis 20, wobei das Rohr einen Innendurchmesser in einem Bereich von 60 bis 600 mm, vorzugsweise in einem Bereich 100 bis 300 mm, sowie vorzugsweise eine Wandstärke in einem Bereich von weniger als 8 mm aufweist.

22. Kaminbaueinheit nach einem der Ansprüche 16 bis 21, welches die EN 1457 erfüllt.

23. Kaminbaueinheit nach einem der Ansprüche 16 bis 22, welches bei der Prüfung nach EN 1457 einen k & d Wert von kleiner als 2 g/(m² · h) aufweist.

24. Verwendung einer Kaminbaueinheit nach einem der Ansprüche 16 bis 23 als Rauchgasrohr und/oder Rohr für brennbare Flüssigkeiten, heiße Flüssigkeiten und/oder Gase.

25. Verfahren zur Herstellung einer Kaminbaueinheit nach einem der Ansprüche 16 bis 23, in dem mindestens eines der folgenden Verfahren eingesetzt wird
a) Gießverfahren
b) Pultrusionsverfahren
c) Wickelverfahren
d) Schleuderrohrtechnikverfahren oder
e) Imprägnierverfahren.

26. Verfahren nach Anspruch 25, wobei in einem Gießverfahren nach a) das anorganische Bindemittel auf Silikat-Basis, das anorganische Fasermaterial und das mindestens eine chemisch reaktive und/oder inaktive Additiv vermischt, die Mischung in Formen, vorzugsweise Kunststoffformen, gegossen wird und ausgehärtet wird.

27. Verfahren nach Anspruch 25, wobei in einem Pultrusionsverfahren nach b), wobei Faserrovings, Vliese und/oder Gewebe aus einem anorganischen Fasermaterial über eine Tauchwalze durch eine mit Bindemittel auf Silikat-Basis und mit mindestens einem chemisch aktiven und/oder inaktiven Additiv gefüllte Trägerwanne gezogen, durch eine nachfolgende Formstation gezogen und anschließend ausgehärtet werden.

28. Verfahren nach Anspruch 25, wobei in einem Wickelverfahren nach c) Faser-Rovings, Fasermatten und/oder Gewebestreifen aus einem anorganischen Fasermaterial in einem Bad, umfassend eine Mischung mit oder aus Bindemittel auf Silikat-Basis und mindestens ein chemisch reaktives und/oder inaktives Additiv, getränkt, auf einen rotierenden Kern aufgewickelt und ausgehärtet werden.

29. Verfahren nach Anspruch 25, wobei in einemSchleuderrohrtechnikverfahren nach d) durch eine Spritzlanze in eine rotierende Metallrohrform eine Mischung mit oder aus Bindemittel auf Silikat-Basis, anorganischem Fasermaterial und mindestens ein chemisch reaktives und/oder inaktives Additiv eingedüst werden, das Rohr in diesem Verfahren schichtweise aufgebaut wird und anschließend das Rohr getrocknet wird.

30. Verfahren nach Anspruch 25, wobei in einem Imprägnierverfahren nach e) Fasergewebe und/oder Vliese aus einem anorganischen Fasermaterial in einem Bad aus einer Mischung aus oder mit Bindemittel auf Silikat-Basis und mindestens einem chemisch reaktiven und/oder inaktiven Additiv getränkt, vortrocknet und anschließend bei 100 bis 150°C unter Druck verpresst wird.

## Claims

1. Chimney component made out of a fibre composite material which can withstand temperatures of up to at least 1000°C and comprises the following components:
- at least one silicate-based binder, wherein the binder can be made out of alkali activatable aluminium silicate minerals and at least one alkaline compound and has a total calcium content as CaO of up to 20% by weight and a total silicon content as SiO₂ of more than 40% by weight,
- at least one inorganic fibre material, wherein a sizing agent comprising at least one silane and/or an epoxide compound is applied to the inorganic fibre material, the sizing agent forming an adhesive coating, a dispersant coating and/or an anticorrosive coating,
- at least one chemically inactive additive and/or
- at least one chemically reactive additive.

2. Chimney component according to claim 1, wherein the silicate-based binder has hydraulic or latent-hydraulic properties before the fibre composite material is hardened.

3. Chimney component according to one of the preceding claims, wherein the fibre composite material comprises an alkaline component, preferably an aqueous solution of water glass, wherein the total content of SiO₂ and K₂O in the water glass in an SiO₂ / K₂O weight ratio lies in a range of 0.5 to 2.0.

4. Chimney component according to one of the preceding claims, wherein the binder has hydraulic or latent-hydraulic aluminium silicate minerals with a CaO:SiO₂ weight ratio in a range of 0.5 to 2.5.

5. Chimney component according to one of the preceding claims 1 to 4, wherein at least one of the aluminium silicate minerals is selected from the group consisting of synthetic aluminium silicates, by-products or waste products of thermal industrial processes, by-products or waste products of steel production or of power generation from fossil fuels, blast furnace slag, bottom ash, fly ash, fine rock dust, clay compounds, pozzolans, china clays, metakaolins and mixtures thereof.

6. Chimney component according to one of the preceding claims, wherein the inorganic fibre material comprises basalt fibres.

7. Chimney component according to one of the preceding claims, wherein the inorganic fibre material comprises short fibres which are in a range of 1 mm to 120 mm long, wherein the short fibres preferably have a tex number in the range of 20 to 250 tex and/or the individual fibre filaments forming the short fibres have a diameter in a range of 5 to 25 µm,
and/or wherein the inorganic fibre material comprises rovings which have a stiffness, measured according to ISO 3375, of more than 100 mm
and/or wherein the inorganic fibre material is in the form of mats or fabrics.

8. Chimney component according to one of the preceding claims, wherein the sizing agent consists of at least one silane and/or one epoxide compound.

9. Chimney component according to one of the preceding claims, wherein the inactive additive comprises refractory clay powder.

10. Chimney component according to one of the preceding claims, wherein the reactive additive is calcium oxide and/or a compound containing active CaO.

11. Chimney component according to one of the preceding claims, wherein the reactive additive is an aluminium phosphate.

12. Chimney component according to one of the preceding claims, wherein the reactive and/or inactive additive comprises particles with a particle diameter of up to 1.2 mm.

13. Chimney component according to one of the preceding claims, wherein the reactive additive and/or inactive additive reduces and/or prevents the shrinkage of the binder during the reaction hardening of the fibre composite material and/or accelerates the reaction hardening.

14. Chimney component according to one of the preceding claims, wherein the elements potassium, calcium and aluminium are present in the binder in a molar ratio of (K + Ca)/Al in a range of 1.5:1 to 2.0:1.

15. Chimney component according to one of the preceding claims 1 to 14, wherein the reaction hardening of the aluminium silicate minerals and of the at least one alkaline compound is carried out at temperatures of between 50 and 150°C.

16. Chimney component according to one of the preceding claims, wherein the chimney component is a fire-resistant pipe, preferably a flue gas pipe of a chimney.

17. Chimney component according to claim 16, wherein the pipe is composed of socket pipes, wherein the socket is more than 10 mm high.

18. Chimney component according to one of claims 16 or 17, wherein the pipe has a temperature resistance of at least six hours at 500°C and 30 min at 1000°C and preferably six hours at 700°C and 30 min at 1000°C.

19. Chimney component according to one of claims 16 to 18, wherein the pipe has a dry bulk density of less than 2.3 g/cm³, preferably less than 2.1 g/cm³.

20. Chimney component according to one of claims 16 to 19, wherein the pipe has a wall thickness of less than 8 mm.

21. Chimney component according to one of claims 16 to 20, wherein the pipe has an internal diameter in a range of 60 to 600 mm, preferably in a range of 100 to 300 mm, and preferably a wall thickness in a range of less than 8 mm.

22. Chimney component according to one of claims 16 to 21, which meets the requirements of EN 1457.

23. Chimney component according to one of claims 16 to 22, which, on examination according to EN 1457, has a k & d value of less than 2 g/(m² • h).

24. Use of a chimney component according to one of claims 16 to 23 as a flue gas pipe and/or a pipe for combustible liquids, hot liquids and/or gases.

25. Method of producing a chimney component according to one of claims 16 to 23, in which at least one of the following processes is used
a) casting
b) pultrusion
c) winding
d) centrifugal casting or
e) impregnation.

26. Method according to claim 25, wherein, in a casting process according to a), the inorganic silicate-based binder, the inorganic fibre material and the at least one chemically reactive and/or inactive additive are mixed and the mixture is poured into moulds, preferably plastic moulds, and hardened.

27. Method according to claim 25, wherein, in a pultrusion process according to b), wherein fibre rovings, non-wovens and/or fabrics made of an inorganic fibre material are pulled using a pan roller through a carrier tray filled with silicate-based binder and with at least one chemically active and/or inactive additive, pulled through a following moulding station and then hardened.

28. Method according to claim 25, wherein, in a winding process according to c), fibre rovings, fibre mats and/or fabric strips made of an inorganic fibre material are soaked in a bath, comprising a mixture with or made of silicate-based binder and at least one chemically reactive and/or inactive additive, wound onto a rotating core and hardened.

29. Method according to claim 25, wherein, in a centrifugal casting process according to d), a mixture with or made of silicate-based binder, inorganic fibre material and at least one chemically reactive and/or inactive additive are spayed using a spray lance into a rotating metal pipe mould, the pipe is built up in layers in this process and the pipe is then dried.

30. Method according to claim 25, wherein, in an impregnation process according to e), fibre fabric and/or non-wovens made of an inorganic fibre material are soaked in a bath made of a mixture of or with silicate-based binder and at least one chemically reactive and/or inactive additive, pre-dried and then compressed at 100 to 150°C.

## Revendications

1. Elément de cheminée fabriqué à partir d'un composite de fibres, qui résiste aux hautes températures jusqu'à au moins 1000 °C et comprend les composants suivants :
- au moins un liant à base de silicate, dans lequel le liant peut être fabriqué à partir de substances minérales aluminosilicatées activables par voie alcaline et au moins un composé alcalin, et présentant une teneur totale en calcium, exprimée en CaO, allant jusqu'à 20 % en poids, ainsi qu'une teneur totale en silicium, exprimée en SiO₂, supérieure à 40 % en poids,
- au moins un matériau fibreux inorganique, dans lequel un encollage comprenant au moins un silane et/ou un composé époxyde est appliqué sur le matériau fibreux inorganique, encollage qui constitue une couche promotrice d'adhérence, une couche de dispersant et/ou une couche anticorrosion,
- au moins un additif chimiquement inactif, et/ou
- au moins un additif chimiquement réactif.

2. Elément de cheminée selon la revendication 1, dans lequel le liant à base de silicate présente, avant le durcissement du composite de fibres, des propriétés hydrauliques ou hydrauliques latentes.

3. Elément de cheminée selon l'une des revendications précédentes, dans lequel le composite de fibres comprend un composant alcalin, de préférence une solution silicatée aqueuse, la teneur totale en SiO₂ et en K₂O de la solution silicatée présentant un rapport en poids SiO₂/K₂O compris dans la plage de 0,5 à 2,0.

4. Elément de cheminée selon l'une des revendications précédentes, dans lequel le liant comprend des substances minérales aluminosilicatées, hydrauliques ou hydrauliques latentes, présentant un rapport en poids CaO:SiO₂ compris dans la plage de 0,5 à 2,5.

5. Elément de cheminée selon l'une des revendications 1 à 4, dans lequel au moins l'une des substances minérales aluminosilicatées est choisie dans le groupe consistant en les aluminosilicates synthétiques, les sous-produits ou déchets de processus industriels thermiques, les sous-produits ou déchets de la production d'acier ou de la production d'énergie à partir de combustibles fossiles, les laitiers de hauts fourneaux, les mâchefers, les cendres volantes, les poussières fines de pierre, les composés aluminés, les pouzzolanes, les chamottes argilo-kaoliniques, les métakaolins et les mélanges de ceux-ci.

6. Elément de cheminée selon l'une des revendications précédentes, dans lequel le matériau fibreux inorganique comprend des fibres de basalte.

7. Elément de cheminée selon l'une des revendications précédentes, dans lequel le matériau fibreux inorganique comprend des fibres courtes ayant une longueur comprise dans la plage de 1 mm à 120 mm, les fibres courtes présentant de préférence un titre compris dans la plage de 20 à 250 tex, et/ou les filaments fibreux individuels constituant les fibres courtes présentant un diamètre compris dans la plage de 5 à 25 µm,
et/ou dans lequel le matériau fibreux inorganique comprend des stratifils, qui présentent une rigidité, mesurée selon ISO 3375, supérieure à 100 mm,
et/ou dans lequel le matériau fibreux inorganique se présente sous forme de mats ou de tissus.

8. Elément de cheminée selon l'une des revendications précédentes, dans lequel l'encollage est constitué d'au moins un silane et/ou d'un composé époxyde.

9. Elément de cheminée selon l'une des revendications précédentes, dans lequel l'additif inactif comprend du sable de chamotte.

10. Elément de cheminée selon l'une des revendications précédentes, dans lequel l'additif réactif est l'oxyde de calcium et/ou un composé contenant du CaO actif.

11. Elément de cheminée selon l'une des revendications précédentes, dans lequel l'additif réactif est un phosphate d'aluminium.

12. Elément de cheminée selon l'une des revendications précédentes, dans lequel l'additif réactif et/ou inactif comprend des particules ayant une granulométrie allant jusqu'à 1,2 mm.

13. Elément de cheminée selon l'une des revendications précédentes, dans lequel l'additif réactif et/ou l'additif inactif réduisent et/ou empêchent le retrait du liant lors du durcissement réactif du composite de fibres et/ou accélèrent le durcissement réactif.

14. Elément de cheminée selon l'une des revendications précédentes, dans lequel le liant contient les éléments potassium, calcium et aluminium selon une proportion en moles (K + Ca)/Al comprise dans la plage de 1,5:1 à 2,0:1.

15. Elément de cheminée selon l'une des revendications précédentes 1 à 14, dans lequel le durcissement réactif des substances minérales aluminosilicatées et de l'au moins un composé alcalin a lieu à des températures comprises entre 50 et 150 °C.

16. Elément de cheminée selon l'une des revendications précédentes, l'élément de cheminée étant un conduit résistant au feu, de préférence un conduit de fumée d'une cheminée.

17. Elément de cheminée selon la revendication 16, dans lequel le conduit est constitué de tuyaux à emboîture, l'emboîture présentant une hauteur supérieure à 10 mm.

18. Elément de cheminée selon l'une des revendications 16 ou 17, dans lequel le conduit présente une résistance aux hautes températures d'au moins six heures à 500 °C, ainsi que de 30 min à 1000 °C, et de préférence de six heures à 700 °C et de 30 min à 1000 °C.

19. Elément de cheminée selon l'une des revendications 16 à 18, dans lequel le conduit présente une masse volumique apparente à sec inférieure à 2,3 g/cm³, de préférence inférieure à 2,1 g/cm³.

20. Elément de cheminée selon l'une des revendications 16 à 19, dans lequel le conduit présente une épaisseur de paroi inférieure à 8 mm.

21. Elément de cheminée selon l'une des revendications 16 à 20, dans lequel le conduit présente un diamètre intérieur compris dans la plage de 60 à 600 mm, de préférence dans la plage de 100 à 300 mm, ainsi que de préférence une épaisseur de paroi comprise dans la plage inférieure à 8 mm.

22. Elément de cheminée selon l'une des revendications 16 à 21, qui satisfait à EN 1457.

23. Elément de cheminée selon l'une des revendications 16 à 22, qui dans le cadre de l'essai selon EN 1457 présente une valeur k & d inférieure à 2 g/(m².h).

24. Utilisation d'un élément de cheminée selon l'une des revendications 16 à 23 en tant que conduit de fumée et/ou tuyau pour liquides combustibles, liquides et/ou gaz chauds.

25. Procédé de fabrication d'un élément de cheminée selon l'une des revendications 16 à 23, dans lequel on utilise l'un des procédés suivants :
a) procédé par coulée
b) procédé par pultrusion
c) procédé par enroulement
d) procédé par la technique des tubes centrifuges ou
e) procédé par imprégnation.

26. Procédé selon la revendication 25, dans lequel, dans un procédé par coulée selon a), le liant inorganique à base de silicate, le matériau fibreux inorganique et l'au moins un additif chimiquement réactif et/ou inactif sont mélangés, le mélange est versé dans des moules, de préférence dans des moules en plastique, et durci.

27. Procédé selon la revendication 25, dans lequel, dans un procédé par pultrusion selon b), des stratifils de fibres, des non-tissés et/ou des tissus en un matériau fibreux inorganique sont tirés par l'intermédiaire d'un rouleau plongeur à travers un bac rempli du liant à base de silicate et de l'au moins un additif chimiquement actif et/ou inactif, tiré par un poste de formage disposé en aval, puis durci.

28. Procédé selon la revendication 25, dans lequel, dans un procédé par enroulement selon c), des stratifils de fibres, des mats de fibres et/ou des bandes de tissu un matériau fibreux inorganique sont immergés dans un bain comprenant un mélange contenant un liant à base de silicate et au moins un additif chimiquement réactif et/ou inactif, ou en étant constitué, enroulés sur un noyau rotatif, et durcis.

29. Procédé selon la revendication 25, dans lequel, dans un procédé par la technique des tubes centrifuges selon d), un mélange contenant un liant à base de silicate, un matériau fibreux inorganique et au moins un additif chimiquement réactif et/ou inactif sont, à l'aide d'une lance d'injection, injectés dans un moule tubulaire métallique rotatif, le tube est constitué par couches dans ce procédé, puis le tube est séché.

30. Procédé selon la revendication 25, dans lequel, dans un procédé par imprégnation selon e), des tissus de fibres et/ou des non-tissés constitués d'un matériau fibreux inorganique sont immergés dans un bain d'un mélange constitué d'un liant à base de silicate et d'au moins un additif chimiquement réactif et/ou inactif, ou les contenant, soumis à un séchage préalable, puis comprimés sous pression à une température de 100 à 150 °C.
